# EUROPÄISCHE PATENTANMELDUNG

(11) **EP 4 737 266 A2**
(43) Veröffentlichungstag der Anmeldung: **06.05.2026**
(21) Anmeldenummer: 26166243.1
(22) Anmeldetag: 18.11.2020
(51) Int. Cl.: B61L 27/40

(54) **EXTERNES ANSTEUERN EINES SCHIENENFAHRZEUGS ZUM HERSTELLEN EINER KUPPLUNGSBEREITSCHAFT**

(30) Priorität: 20.11.2019 DE 102019217899
(62) Teilanmeldung aus: 20208388.7
(71) Anmelder: ALSTOM Holdings, 93400 Saint-Ouen-sur-Seine (FR)
(72) Erfinder: Dämmig, Andre, 68259 Mannheim (DE)
(74) Vertreter: Patentanwälte Bressel und Partner mbB

(57) **Zusammenfassung**

Die Erfindung betrifft ein Verfahren zum Herstellen der Kupplungsbereitschaft eines Schienenfahrzeugs (10),
mit:
- Übermitteln einer Identifizierungsinformation des Schienenfahrzeugs (10) an eine fahrzeugexterne Steuervorrichtung (42);
- Erzeugen eines Steuersignals (S) durch die Steuervorrichtung (42), wobei das Steuersignal (S) dazu eingerichtet ist, das Schienenfahrzeug (10) zum Herstellen von dessen Kupplungsbereitschaft zu veranlassen;
- Übermitteln des Steuersignals (S) an das Schienenfahrzeug (10).

Ferner betrifft die Erfindung eine Steuereinrichtung zum Herstellen der Kupplungsbereitschaft eines Schienenfahrzeugs (10).

## Beschreibung

Die Erfindung betrifft ein Verfahren und eine Anordnung zum Herstellen einer Kupplungsbereitschaft bei einem Schienenfahrzeug.

Schienenfahrzeuge werden bekanntermaßen aneinander gekuppelt, um als ein Verbund oder auch ein Zug aus mehreren Einzel-Schienenfahrzeugen oder einzelnen Teilzügen gemeinsam bewegt zu werden.

Im Rahmen dieser Offenbarung kann unter einem Schienenfahrzeug allgemein eine Lokomotive, ein Waggon, ein Triebwagen oder ein Verbund aus mehreren Einzel-Schienenfahrzeugen (zum Beispiel ein Teilzug) verstanden werden. Ein solches Schienenfahrzeug kann mit wenigstens einem weiteren Schienenfahrzeug jeglicher der vorstehend genannten Beispiele gekuppelt werden (z.B. mit einem weiteren Verbund aus Einzel-Schienenfahrzeugen). Anders ausgedrückt fallen unter den Begriff Schienenfahrzeug im Rahmen dieser Offenbarung auch Teil-Verbindungen oder Teil-Züge, die miteinander zum Ausbilden eines größeren Verbundes oder größeren Zuges miteinander gekuppelt werden sollen.

Die Kupplung erfolgt bevorzugt mechanisch. Sie ermöglicht allgemein das Übertragen einer Traktions- und/oder Zugkraft zwischen den Schienenfahrzeugen. In an sich bekannter Weise kann die Kupplung durch Ineingriffbringen von Kupplungen der miteinander zu kuppelnden Schienenfahrzeuge hergestellt werden. Bei den Kupplungen handelt es sich z.B. um mechanische Bauteile oder Baugruppen, die an bzw. in einem Endbereich (z.B. einer Vorder- oder Rückfront) des Schienenfahrzeugs angeordnet sind, insbesondere an einem freien Ende des Schienenfahrzeugs, das quer zu den Schienen verläuft. Die Kupplungen können in bekannter Weise ein zumindest teilautomatisches Kuppeln von Schienenfahrzeugen aneinander ermöglichen.

Alternativ oder zusätzlich ist es aber auch möglich, dass die Kupplung das Herstellen einer elektrischen Verbindung und/oder signalübertragenden Verbindung (z.B. einer Datenverbindung) umfasst.

Insbesondere im öffentlichen Nahverkehr werden je nach Passagieraufkommen mehrere Schienenfahrzeuge in Form von Teilzügen, die jeweils mehrere Einzelwaggons und/oder Triebwagen umfassen, bedarfsweise miteinander gekuppelt.. Insbesondere bei Kupplungen, die zunächst in eine Kuppelposition bewegt werden müssen, erfordert dies, dass sich beide Schienenfahrzeuge in einem betriebsbereiten Zustand befinden (also beispielsweise nicht in einem Ruhemodus) und dass beide Schienenfahrzeuge kupplungsbereit sind. Insbesondere kann dies erfordern, dass Kupplungen der Schienenfahrzeuge (also z.B. die entsprechende mechanische Baugruppe bzw. das mechanische Bauteil) in eine kupplungsbereite Position gebracht und z.B. ausgeschwenkt werden. Dies kann manuelle Eingriffe erfordern und/oder zumindest ein manuelles Aktivieren derartige Bewegungen aus einem Führerstand des Schienenfahrzeugs heraus.

Gleiches gilt auch für den Fall, dass die Kupplung verkleidet ist und vor dem Ausfahren der Kupplung zunächst eine Verkleidung geöffnet werden muss.

Im praktischen Betrieb tritt oftmals der Fall auf, dass ein Fahrzeugführer sich in einem der Schienenfahrzeuge befindet und damit zu einem anzukuppelnden weiteren Schienenfahrzeug fährt. Letzteres muss er z.B. durch Betreten von dessen Führerstand oder durch eine Schalthandlung von außen zunächst in einen kupplungsbereiten Zustand bringen.

Dies birgt Sicherheitsrisiken, da der Fahrzeugführer zwischen den Schienenfahrzeugen wechseln muss bzw. erfordert gegebenenfalls zusätzliches Personal außerhalb des Fahrzeuges.

Die DE 10 2016 220 215 A1 offenbart eine Lösung, um ein ausgefallenes Schienenfahrzeug mit funktionsfähigen Schienenfahrzeugen zu verkuppeln und einen neuen Zugverband zu bilden, wofür eine die Schienenfahrzeuge überwachende Zentraleinrichtung Steuersignale erzeugt.

Die DE 10 2012 009 114 A1 offenbart das Austauschen von Daten zwischen zu kuppelnden Schienenfahrzeugen bereits vor dem mechanischen Kuppelvorgang, wobei mit Hilfe dieser Daten der Kupplungsvorgang unterstützt wird.

Die DE 93 16 831 U1 offenbart eine Einrichtung zum Herstellen der Ablaufbereitschaft eines Eisenbahnfahrzeugs mit automatischer Kupplung sowie das Herstellen von dessen Kuppelbereitschaft. Gleiches gilt für die DE 44 41 396 C1.

Die DE 10 2008 034 018 B3 offenbart eine Lösung zum Ermitteln des Kupplungszustandes einer Eisenbahnkupplung.

Es besteht somit allgemein ein Bedarf dafür, das Kuppeln von Schienenfahrzeugen miteinander zu verbessern und insbesondere den erforderlichen Zeitaufwand zu verringern.

Diese Aufgabe wird durch die Gegenstände der beigefügten unabhängigen Ansprüche gelöst. Vorteilhafte Weiterbildungen sind in den abhängigen Ansprüchen angegeben. Sämtliche der vorstehenden Merkmale und Erläuterungen können auch auf die vorliegende Lösung zutreffen bzw. bei dieser vorgesehen sein, sofern nicht anders angegeben oder ersichtlich.

Erfindungsgemäß wurde erkannt, dass es vorteilhaft ist, insbesondere in den vorstehend geschilderten Betriebsszenarien ein Schienenfahrzeug sozusagen von extern bzw. von außen in einen kupplungsbereiten Zustand zu versetzen. Dies kann durch Übermitteln entsprechender Steuersignale geschehen, die das Schienenfahrzeug zum Einnehmen eines kupplungsbereiten Zustandes veranlassen.

Ein Fahrzeugführer (hierin auch als Fahrer bezeichnet) muss dann nicht mehr zwischen miteinander zu kuppelnden Schienenfahrzeugen wechseln, sondern kann die Kupplungsbereitschaft z.B. auch dann herstellen, wenn er sich in einem weiteren Schienenfahrzeug befindet, das mit einem aktuell noch nicht kupplungsbereiten Schienenfahrzeug gekuppelt werden soll. Prinzipiell ist mit der vorliegenden Lösung aber auch ein vollständig autonomer Betrieb der Schienenfahrzeuge ohne Fahrzeugführer möglich, beispielsweise wenn die Schienenfahrzeuge ferngesteuert werden.

Die hierin offenbarte Lösung ist auch dann anwendbar, wenn sich das anzukuppelnde Schienenfahrzeug zunächst in einem Ruhezustand befindet oder allgemein inaktiv ist. In dem Ruhezustand kann das Schienenfahrzeug z.B. mit einem niedrigen Energiebedarf geparkt bzw. abgestellt werden, bis es eingesetzt werden soll. Es kann im Ruhezustand vollständig elektrisch abgeschaltet sein.

Der Ruhezustand kann sich zusätzlich oder alternativ dadurch auszeichnen, dass eine zentrale Fahrzeugsteuerung (mit einem oder mehreren Steuergeräten) abgeschaltet ist.

Vorzugsweise ist im Ruhezustand zumindest ein Traktionssystem des Schienenfahrzeugs elektrisch abgeschaltet, d. h von einer elektrischen Energiezufuhr getrennt.

Soll ein entsprechendes Schienenfahrzeug angekuppelt werden, kann das Schienenfahrzeug vorzugsweise zunächst von extern aktiviert werden bzw. zum Beenden des Ruhemodus angesteuert werden. Anschließend kann das Schienenfahrzeug zum Herstellen der Kupplungsbereitschaft angesteuert werden.

Vorteilhafterweise erfolgt das Ansteuern über eine fahrzeugexterne Steuereinrichtung eines Betriebsleitsystems. Dann ist eine direkte Kommunikation der Schienenfahrzeuge untereinander nicht zwingend erforderlich. Zudem kann auf ohnehin bereitzustellende oder auch bereits existierende Übertragungskanäle bzw. Datenverbindungen zwischen dem Betriebsleitsystem und den Schienenfahrzeugen zurückgegriffen werden. Dies mindert die Systemkomplexität und ermöglicht aufwandsarme Nachrüstungen.

Insbesondere kann ein (vorzugsweise aktives, mit einem Fahrzeugführer besetztes und/oder sich nicht in einem Ruhezustand befindliches) Schienenfahrzeug ein weiteres (vorzugsweise inaktives, nicht mit einem Fahrzeugführer besetztes und/oder sich in einem Ruhezustand befindliches) Schienenfahrzeug identifizieren und darauf basierend das Betriebsleitsystem veranlassen, dieses weitere Schienenfahrzeug aufzuwecken und/oder zum Herstellen der Kupplungsbereitschaft anzusteuern.

Insbesondere wird ein Verfahren zum Herstellen der (insbesondere mechanischen) Kupplungsbereitschaft eines Schienenfahrzeugs (z.B. eines Tram-Teilzuges und/oder oder eines Triebwagens) vorgeschlagen, mit:
- Übermitteln einer Identifizierungsinformation des (bzw. zu dem, von dem oder über das) Schienenfahrzeug(s) an eine fahrzeugexterne Steuervorrichtung;
- Erzeugen eines Steuersignals durch die Steuervorrichtung, wobei das Steuersignal dazu eingerichtet (z.B. entsprechend codiert und/oder programmiert) ist, das Schienenfahrzeug zum Herstellen (oder, mit anderen Worten, Bereitstellen) von dessen Kupplungsbereitschaft zu veranlassen;
- Übermitteln des Steuersignals an das Schienenfahrzeug.

Die Steuervorrichtung kann wenigstens eine Prozessoreinrichtung umfassen (z.B. einen Mikroprozessor) und/oder wenigstens eine Speichereinrichtung. Die Prozessoreinrichtung kann dazu eingerichtet sein, Programmanweisungen und/oder Algorithmen auszuführen, die z.B. auf der Speichereinrichtung hinterlegt sind. Beim Ausführen dieser Programmanweisungen/Algorithmen können Steuersignale mit den hierin geschilderten Inhalten oder Funktionen erzeugt werden. Die Steuervorrichtung kann wenigstens eine Kommunikationseinrichtung umfassen. Diese kann insbesondere für eine kabellose Kommunikation eingerichtet sein, z.B. mit wenigstens einem Schienenfahrzeug.

Auch die Schienenfahrzeuge können Kommunikationseinrichtungen umfassen, insbesondere für eine kabellose Kommunikation mit der fahrzeugexternen Steuervorrichtung. Diese Kommunikation kann z.B. per Mobilfunk oder allgemein per Funk erfolgen. Derartige Kommunikationseinrichtungen können von hierin geschilderten Steuergeräten der Schienenfahrzeuge umfasst oder durch diese bereitgestellt werden sein.

Allgemein kann die fahrzeugexterne Steuervorrichtung extern von demjenigen Schienenfahrzeug bereitgestellt sein, dessen Kupplungsbereitschaft herzustellen ist. Es kann sich z.B. um eine unbewegliche und/oder feststehende Steuervorrichtung handeln, die z.B. in einem übergeordneten Betriebsleitsystem integriert ist (z.B. als Bestandteil eines Betriebsleitzentrums oder einer Leitstelle). Nicht prinzipiell ausgeschlossen ist aber, dass die Steuervorrichtung fahrzeugextern bezogen auf das zum Herstellen der Kupplungsbereitschaft anzusteuernde Schienenfahrzeug ist, jedoch von einem anderen Schienenfahrzeug umfasst ist.

Prinzipiell kann es sich also um eine Steuervorrichtung handeln, die extern von dem spezifischen Schienenfahrzeug bereitgestellt ist, dessen Kupplungsbereitschaft hergestellt werden soll. Der externe Zustand kann dadurch erreicht werden, dass die Steuervorrichtung baulich von diesem Schienenfahrzeug getrennt und/oder nicht physisch damit verbunden und/oder nicht gemeinsam hiermit bewegbar ist.

Das Steuersignal kann digital sein und/oder digital erzeugt werden. Optional kann es in ein analoges Signal und zum Beispiel in ein analoges Funksignal umgewandelt werden. Allgemein können hierin erwähnte Steuersignale gemäß vorbestimmter Kommunikationsprotokolle erzeugt und insbesondere codiert werden. Sie können vorbestimmte und/oder identifizierende Bitfolgen oder dergleichen umfassen, um von den jeweiligen Kommunikationseinheiten erkannt und/oder empfangen werden zu können.

Wenn das Schienenfahrzeug ein entsprechendes Steuersignal erhält, kann darauf basierend zum Beispiel wenigstens ein Hardwareausgang (beispielsweise von einem Steuergerät des Schienenfahrzeugs) angesteuert und/oder geschaltet werden. Insbesondere kann an diesem Ausgang dann eine Spannung angelegt werden und/oder dieser kann allgemein in einen stromführenden Zustand versetzt werden. Dies kann darin resultieren, dass wenigstens ein weiteres Steuergerät und/oder wenigstens ein Aktor aktiviert wird. Bei dem Aktor kann es sich um einen Elektromotor handeln oder um einen pneumatischen oder hydraulischen Aktor. Der Aktor kann dazu eingerichtet sein, in der nachstehend erläuterten Weise z.B. eine Kupplungsverkleidung und/oder eine Kupplung des Schienenfahrzeugs zu bewegen. Das weitere Steuergerät kann z.B. weitere Steuergeräte einschalten oder weitere Aktoren steuern.

Das Übermitteln des Steuersignals an das Schienenfahrzeug kann umfassen, dass die Steuereinrichtung das Steuersignal übermittelt oder zumindest die Übermittlung veranlasst. Allgemein kann das Übermitteln kabellos erfolgen, z.B. durch Aussenden des Signals über eine Funk- und/oder Mobilfunkantenne der Steuervorrichtung.

Dasjenige Fahrzeug, dessen Kupplungsbereitschaft hergestellt werden soll bzw. das von der fahrzeugexternen Steuervorrichtung anzusteuern ist, wird hierin auch als erstes Schienenfahrzeug bezeichnet. Wie nachstehend noch näher erläutert, kann es sich zunächst in einem inaktiven oder abgeschalteten Modus befinden und/oder in einem Ruhezustand. Insbesondere kann das Schienenfahrzeug z.B. abgestellt oder geparkt sein, ohne dass es dabei einen elektrischen Energiebedarf aufweist, der für eine Fahrbereitschaft erforderlich wäre.

Zum Herstellen der Kupplungsbereitschaft kann das Schienenfahrzeug zunächst aktiviert werden oder, anders ausgedrückt, aufgeweckt werden. Dies kann gleichbedeutend mit einem Beenden des Ruhezustands sein. Wie nachstehend noch erläutert, kann auch ein solcher Aufweckvorgang durch die fahrzeugexterne Steuervorrichtung initiiert werden. Anschließend kann das Schienenfahrzeug dann die Kupplungsbereitschaft in der hierin geschilderten Weise herstellen und kann es bevorzugt an ein weiteres Schienenfahrzeug angekuppelt werden.

Vorzugsweise ist es nicht erforderlich, dass das (erste) Schienenfahrzeug zum Herstellen der Kupplungsbereitschaft manuell und/oder aus einem Führerstand heraus betätigt wird oder dass überhaupt ein Fahrzeugführer das Schienenfahrzeug betreten muss. Stattdessen kann die Kupplungsbereitschaft vollständig von extern und z.B. über eine Leitstelle hergestellt werden.

Prinzipiell kann auch vorgesehen sein, dass insbesondere nach einem Entkuppeln von einem weiteren Schienenfahrzeug die Steuereinrichtung dazu eingerichtet ist, ein Steuersignal zum Beenden der Kupplungsbereitschaft und gegebenenfalls zum Einnehmen eines Ruhezustands zu erzeugen. Auch in diesem Fall kann darauf hin das Erfordernis entfallen, dass ein Führerstand dieses Schienenfahrzeugs betreten und die entsprechend Schritte manuell initiiert werden müssen.

Das Beenden der Kupplungsbereitschaft kann umfassen, dass eine Kupplungsverkleidung zum Beispiel geschlossen wird oder allgemein die Kupplung wieder verdeckt. Zusätzlich oder alternativ kann vorgesehen sein, dass die Kupplung in eine inaktive Stellung bzw. Position bewegt wird (zum Beispiel in das Schienenfahrzeug eingefahren oder eingeschwenkt wird). Das Steuersignal kann dazu eingerichtet sein, ein entsprechendes Ansteuern von Aktoren der Kupplung bzw. der Kupplungsverkleidung zu veranlassen. Das Steuersignal kann auch diejenige Kupplung bzw. Kupplungsverkleidung aus einer Mehrzahl von Kupplungen des Schienenfahrzeugs definieren, deren Kupplungsbereitschaft entsprechend zu beenden ist.

Eine Weiterbildung des Verfahrens und der Anordnung sieht vor, dass das Herstellen der Kupplungsbereitschaft wenigstens eines der folgenden umfasst:
- Freilegen einer Kupplung (also zum Beispiel einer entsprechenden mechanischen Kupplungs-Baugruppe, -Schnittstelle und/oder eines Kupplungsbauteils) des Schienenfahrzeugs von einer Kupplungsverkleidung;
- Anordnen einer Kupplung des Schienenfahrzeugs in einer kupplungsbereiten Position.

Alternativ formuliert kann die Kupplung (also das mechanische Bauteil oder die mechanische Baugruppe, die jeweils eine mechanische Schnittstelle zum Ankuppeln an ein anderes Schienenfahrzeug bilden und/oder aufweisen) in einem nichtkupplungsbereiten Zustand von außen unzugänglich sein. Dies kann durch z.B. Schließen oder anderweitiges Positionieren der Kupplungsverkleidung in einem die Kupplung verdeckenden Zustand erreicht werden. Derartige Lösungen sind prinzipiell bekannt. Zum Herstellen der Kupplungsbereitschaft kann die Kupplungsverkleidung dann in einer anderen Position angeordnet werden, insbesondere derart, dass sie die Kupplung nicht länger größtenteils oder vollständig verdeckt.

Insbesondere kann die Kupplungsverkleidung z.B. eingezogen, weggeklappt, geöffnet, verschwenkt oder anderweitig bewegt werden, sodass die Kupplung zum Ankuppeln an ein weiteres Schienenfahrzeug unverdeckt, zugänglich und/oder freigelegt ist. Beispielsweise ist es bekannt, Kupplungsverkleidungen als ein- oder mehrteilige schwenkbaren Hauben auszubilden, die in einer verschlossenen Position (die Kupplung verdeckend) oder in einer geöffneten Position (die Kupplung freilegend) anordenbar sind.

Zusätzlich oder alternativ kann die Kupplung selbst (also das mechanische Bauteil bzw. die mechanische Baugruppe) in eine kupplungsbereite Position bewegt werden, z.B. erneut mittels eines entsprechenden Aktors. Beispielsweise kann die Kupplung in Fahrzeuglängsrichtung bewegt und insbesondere ausgefahren werden. Alternativ oder zusätzlich kann sie verschwenkt werden, zum Beispiel um eine Fahrzeughochachse (also um ein orthogonal zur Ebene der Schienenstrecke verlaufenden Achse).

In ihrer kupplungsbereiten Position liegt die Kupplung vorzugsweise einem entgegenkommenden Schienenfahrzeug gegenüber. Weiter bildet die Kupplung dann bevorzugt ein vorderstes bzw. äußerstes Ende des Schienenfahrzeugs entlang der Fahrzeuglängsachse, sodass ein entgegenkommendes Schienenfahrzeug die Kupplung kontaktiert, nicht aber weitere Bereiche (insbesondere einen Führerstand oder einen eigentlichen Wagenkasten) des Schienenfahrzeugs.

Gemäß diesen Ausführungsformen kann also ohne zwingende manuelle Eingriffe (insbesondere aus einem Führerstand heraus) eine zum Herstellen der Kupplungsbereitschaft zu betätigende Aktorik aktiviert werden und können relevante Komponenten, wie die Kupplungsverkleidung oder aber die (mechanische) Kupplung, geeignet positioniert und bewegt werden.

Eine Weiterbildung sieht vor, dass die Steuereinrichtung von einem (computerbasierten und/oder rechnergestützten) Betriebsleitsystem umfasst ist. Dieses ist vorteilhafterweise dazu eingerichtet, mit einer Mehrzahl von Schienenfahrzeugen insbesondere gleichzeitig zu kommunizieren. Bei dem Betriebsleitsystem kann es sich um ein sogenanntes rechnerbasiertes oder rechnergestütztes Betriebsleitsystem (RBL) oder auch ein ITCS-System handeln (Intermodal Transport Control System). Das Betriebsleitsystem kann auch als CAD-, AVL- oder AVLS-System bezeichnet werden (Computer Aided Dispatch, Automatic Vehicle Location, Automatic Vehicle Location System).

Das Betriebsleitsystem kann feststehend und/oder ortsgebunden ausgebildet und zum Beispiel in einer Leitstelle bereitgestellt sein. Es kann wenigstens eine Steuereinrichtung der hierin geschilderten Art umfassen. Allgemein kann es einen Betriebsleitserver umfassen, in dem dann z.B. die Steuereinrichtung integriert ist, der durch die Steuereinrichtung bereitgestellt ist und/oder mit dem die Steuereinrichtung verbunden ist.

In an sich bekannter Weise kann das Betriebsleitsystem mit einer Mehrzahl von Fahrzeugen und insbesondere mit einer Fahrzeugflotte kommunizieren, die z.B. in einem gemeinsamen Schienenverkehrsnetz verkehren bzw. verkehrt (z.B. einem Schienenverkehrsnetz des öffentlichen Nahverkehrs).

Zusätzlich oder alternativ kann das Betriebsleitsystem mit Ortungs- oder allgemeinen Erfassungseinheiten kommunizieren (zum Beispiel mit sogenannten Ortsbarken oder auch Beacons), die innerhalb des Schienenverkehrsnetzes bereitgestellt sind und z.B. eine physikalische Ortung der Schienenfahrzeuge ermöglichen. Vorzugsweise ist das Betriebsleitsystem dazu eingerichtet, Schienenfahrzeuge zu orten (z.B. per empfangener GPS-Signale oder mittels vorstehender Beacons), Mitteilungen an die Schienenfahrzeuge bzw. deren Fahrzeugfahrer zu übermitteln, das Einhalten eines Fahrplans zu überwachen und/oder automatische Betriebsführungsfunktionen zu veranlassen (z.B. ein ferngesteuertes Aktivieren von Weichen oder Signalanlagen). Auch das Übermitteln von Fahrgastinformationen mittels eines Betriebsleitsystems ist möglich und im Stand der Technik bekannt.

Vorzugsweise handelt es sich bei dem Betriebsleitsystem nicht um ein ETCS-System, wie es zur Steuerung des Zugverkehrs insbesondere im Schienenfernverkehr bekannt ist. Allgemein kann also die fahrzeugexterne Steuervorrichtung nicht von einem ETCS-System umfasst sein.

Das Betriebsleitsystem kann z.B. einen Funkserver, einen Zentralserver (beispielsweise umfassend oder bereitgestellt durch die hierin geschilderte Steuereinrichtung) und/oder eine Datenbank (zum Beispiel mit Fahrplandaten) umfassen. Zusätzlich oder alternativ kann ein sogenannter Disponenten-Arbeitsplatz bereitgestellt sein, über den ein Disponent (oder auch Betriebsführer) das Betriebsleitsystem steuern und/oder überwachen kann. Die geschilderten Komponenten sind vorzugsweise zumindest teilweise an einem gemeinsamen Ort zusammengefasst, z.B. in einer Leitstelle, d.h. einem gemeinsamen Gebäude. Über eine Kommunikationseinrichtung, insbesondere einen Funksender, kann dann auf Infrastrukturkomponenten (z.B. Fahrgastinformationsanzeigen, Signaleinheiten, Weichen oder aber auf die Schienenfahrzeuge selbst) zugegriffen oder können zum Beispiel Signale an diese übertragen oder Informationen von diesen erhalten werden.

Mit anderen Worten kann unter einem (rechnergestützten) Betriebsleitsystem ein System zur Ortung von Fahrzeugen und/oder Kommunikation mit den Fahrzeugen verstanden werden. Das Betriebsleitsystem kann vorzugsweise Fahrplanabweichungen ermitteln und gegebenenfalls Gegenmaßnahmen einleiten. Unter der Leitstelle kann eine zentrale Einrichtung verstanden werden, die das rechnergestützte Betriebsleitsystem oder zumindest dessen Recheneinheiten zumindest teilweise umfasst und in der Informationen über den aktuellen Betriebsablauf gesammelt und ausgewertet werden.

Vorteilhaft ist das Integrieren der Steuereinrichtung in ein Betriebsleitsystem bzw. das Verwenden einer Steuereinrichtung des Betriebsleitsystems für die hierin geschilderten Zwecke dahingehend, als dass die Erfindung dann bei bestehenden Betriebsleitsystemen einfach nachrüstbar ist.

Insbesondere kann auf ohnehin bereitgestellte Kommunikationsverbindungen und/oder Datenkanäle zwischen Betriebsleitsystem und Schienenfahrzeugen zurückgegriffen werden. Die Schienenfahrzeuge müssen dann auch nicht zwingend für eine direkte Kommunikation miteinander ausgelegt werden. Stattdessen können sie sozusagen indirekt bzw. mittelbar über das Betriebsleitsystem miteinander kommunizieren und/oder den gegenseitigen Betrieb beeinflussen. Dies trifft beispielsweise auf die nachstehend geschilderte Situation zu, wobei ein Schienenfahrzeug die Betriebsleitstelle bzw. das Betriebsleitsystem anweist, ein anderes Schienenfahrzeug zum Herstellen der Kupplungsbereitschaft anzusteuern.

Bei der Identifizierungsinformation kann es sich um eine Information handeln, mit der die Identität des Schienenfahrzeugs zumindest mittelbar und vorzugsweise eindeutig feststellbar ist. Insbesondere kann sich um eine Information handeln, die es ermöglicht, dass das Schienenfahrzeug von der Steuereinrichtung adressiert wird oder, mit anderen Worten, dass die Steuereinrichtung an das Schienenfahrzeug das Steuersignal übermitteln kann. Es kann sich zum Beispiel um eine Kennung handeln, eine Bezeichnung, eine Seriennummer oder dergleichen.

Durch Berücksichtigen einer entsprechenden Identifizierungsinformation kann auch gewährleistet werden, dass tatsächlich das gewünschte bzw. beabsichtigte Schienenfahrzeug zum Herstellen der Kupplungsbereitschaft aktiviert bzw. angesteuert wird. Es kann also verhindert werden, dass versehentlich Schienenfahrzeuge zum Beispiel auf einem Nebengleis angesteuert werden.

Die Identifizierungsinformation kann mittels einer Erfassungseinrichtungen erfassbar sein. Dabei kann es sich zum Beispiel um eine Kamera (beispielsweise bei optisch erfassbaren Identifizierungsinformationen) oder um ein Lesegerät handeln, das zum Beispiel elektronische Informationen auslesen kann. Beispielsweise kann es sich um eine RFID-Erfassungseinrichtung handeln und die Identifizierungsinformationen können von einem RFID-Chip, -Transponder oder -Träger des Schienenfahrzeugs umfasst sein. Weitere mögliche Träger der Identifizierungsinformationen sind beispielsweise ein Barcode, ein Nummernschild, ein Kennzeichen oder eine Seriennummer.

Allgemein kann also vorgesehen sein, dass das Schienenfahrzeug über einen Träger der Identifizierungsinformationen verfügt, der mittels einer Erfassungseinrichtung erfassbar bzw. auslesbar ist. Diese Erfassungseinrichtung kann an einem weiteren Schienenfahrzeug angeordnet bzw. von diesen umfasst sein.

Erfindungsgemäß ist vorgesehen, dass die Identifizierungsinformation durch ein weiteres Schienenfahrzeug an die Steuervorrichtung übermittelt wird. Insbesondere kann die Identifizierungsinformation durch dieses weitere Schienenfahrzeug (hierin auch als zweites Schienenfahrzeug bezeichnet) erfasst werden. Beispielsweise kann dieses weitere Schienenfahrzeug eine RFID-Erfassungseinrichtung umfassen und einen RFID-Träger des anzukuppelnden (ersten) Schienenfahrzeugs sowie die darin codierten Identifizierungsinformationen erfassen.

Allgemein kann vorgesehen sein, dass das weitere Schienenfahrzeug sich nicht in einem Ruhezustand befindet. Stattdessen kann es mit einem Fahrzeugführer besetzt sein und/oder Traktionsenergie erzeugen und sich beispielsweise dem ersten Schienenfahrzeug nähern. Letzteres kann, wie erwähnt, stehen und sich allgemein in einem Ruhezustand befinden.

Das weitere Schienenfahrzeug kann dann die Identifizierungsinformationen des ersten Schienenfahrzeugs erfassen und an die Steuereinrichtung übermitteln. Letztere kann darauf basierend das identifizierte erste Schienenfahrzeug ansteuern. Insbesondere kann es, sofern sich das erste Schienenfahrzeug in einem Ruhemodus befindet, dieses aufwecken. Hierfür kann eine Kommunikationseinrichtung und/oder ein allgemeines Steuergerät ein vorbestimmtes Signal erhalten und dann zum Beispiel anderweitige Steuergeräte und/oder Aktoren (insbesondere für eine Kupplungsverkleidung oder die Kupplungs-Baugruppe), die im Ruhezustand inaktiv waren, aktivieren.

Zusammengefasst kann das (erste) Schienenfahrzeug einen Informationsträger (zum Beispiel für die bzw. von oder mit den Identifizierungsinformationen) und das weitere (zweite) Schienenfahrzeug eine Erfassungseinrichtung umfassen, die dazu eingerichtet ist, die Identifizierungsinformationen anhand des Informationsträgers zu erfassen.

Vorteilhaft ist dies dahingehend, als dass keine Kommunikation zwischen den Schienenfahrzeugen ermöglicht werden muss, was die Kosten und Komplexität reduziert. Stattdessen kann auf ohnehin vorzusehende Kommunikationsmöglichkeiten mit der Steuereinrichtung und insbesondere einer Leitstelle zurückgegriffen werden. Dies erleichtert auch das Nachrüsten der hierin offenbarten Lösung bei existierenden Infrastrukturen und/oder Verkehrsbetrieben.

Vorteilhafterweise erfolgt dieser Vorgang zumindest insoweit fahrerautonom, als dass ein Fahrzeugführer zum Beispiel allenfalls den Kupplungswunsch anzeigen und/oder initiieren muss, sämtliche weiteren Schritte dann aber automatisch und fahrerautonom ablaufen. Beispielsweise kann der Fahrzeugführer des weiteren Schienenfahrzeugs, wenn er sich dem ersten Schienenfahrzeug genähert hat, über eine vorbestimmte Eingabe zum Beispiel in einem Führerstand den Kupplungswunsch mit dem ersten Schienenfahrzeug anzeigen. Daraufhin kann dann das weitere Schienenfahrzeug die Identifizierungsinformationen erfassen und an die Steuereinrichtung übermitteln, welche dann die Kupplungsbereitschaft des ersten Schienenfahrzeugs zumindest mittelbar herstellt (d. h. das erste Schienenfahrzeug entsprechend ansteuert).

Gemäß einer Weiterbildung ist ferner vorgesehen, dass eine insbesondere mechanische Kupplungsverbindung (oder auch allgemein eine Kupplung) zwischen dem Schienenfahrzeug und dem weiteren Schienenfahrzeug nach Übermitteln des Steuersignals hergestellt wird. Mit anderen Worten kann erfindungsgemäß ein Ankuppeln des weiteren Schienenfahrzeugs an das (erste) Schienenfahrzeug umfasst sein.

Wie erwähnt, kann sich das (erste) Schienenfahrzeug zunächst in einem Ruhezustand befinden (hierin auch als Ruhemodus bezeichnet). Durch die fahrzeugexterne Steuervorrichtung kann somit auch ein Steuersignal zum Beenden des Ruhezustands erzeugt werden. Dieses kann einem Steuersignal zum Herstellen der Kupplungsbereitschaft vorausgehen.

Insbesondere kann die Steuereinrichtung auch dazu eingerichtet sein, zu ermitteln, ob sich das Schienenfahrzeug in einem Ruhezustand befindet (zum Beispiel durch Senden einer entsprechenden Anfrage an eine Kommunikationseinrichtung dieses Schienenfahrzeugs). Ist dies der Fall, kann zunächst ein Aufweck-Steuersignal gesendet werden. Ist dies nicht der Fall, kann direkt das Steuersignal zum Herstellen der Kupplungsbereitschaft erzeugt und übermittelt werden. Insgesamt ermöglicht dies eine zuverlässige und schnellstmögliche Herstellung der Kupplungsbereitschaft.

Zusammengefasst kann also vorgesehen sein, dass sich wenigstens ein Steuergerät des Schienenfahrzeugs in einem Ruhemodus befindet, der nach Maßgabe des Steuersignals zum Beenden des Ruhezustands (wie von der fahrzeugexternen Steuervorrichtung erzeugt) beendbar ist. Bei dem Steuergerät kann es sich um ein für eine Kommunikation mit der externen Steuervorrichtung (bzw. dem Betriebsleitsystem) vorgesehenes Steuergerät handeln. Dieses kann dann in der beschriebenen Weise weitere Steuergeräte und/oder Aktoren zum Herstellen der Kupplungsbereitschaft aktivieren und/oder aufwecken (d. h. deren etwaigen Ruhemodus beenden).

Gemäß einer weiteren Ausführungsform, kann auch ermittelt werden, mit welcher aus einer Mehrzahl von Kupplungen des Schienenfahrzeugs die Kupplungsbereitschaft hergestellt werden soll oder, anders ausgedrückt, welche Kupplung kupplungsbereit gemacht werden soll.

Beispielsweise ist es bekannt, dass Schienenfahrzeuge in Längsrichtung betrachtet zwei Ende aufweisen (Vorder- und Hinterende) oder, mit anderen Worten, eine hintere Front und eine Vorderfront. Diese erstecken sich jeweils quer zur Schienenrichtung. Oftmals ist dort auch jeweils eine Kupplung vorgesehen und ggf. auch jeweils ein Führerstand. Ein weiteres Schienenfahrzeug wird sich zum Ankuppeln aber lediglich einem dieser Enden nähern, sodass es vorteilhaft, da z.B. energiesparend ist, auch nur dort die Kupplungsbereitschaft herzustellen.

Dies kann vorliegend dadurch ermöglicht werden, dass diejenige ausgewählte Kupplung zumindest mittelbar identifiziert wird, deren Kupplungsbereitschaft benötigt wird, und das Steuersignal bspw. Informationen darüber enthält, welche aus einer Mehrzahl von Kupplungen in Bereitschaft versetzt werden soll.

Zum Beispiel kann anhand der Identifizierungsinformation zumindest mittelbar feststellbar sein, mit welcher aus einer Mehrzahl von Kupplungen des Schienenfahrzeugs die Kupplungsbereitschaft hergestellt werden soll. Hierfür können je Kupplung oder auch je dortigem Fahrzeugende bzw. Fahrzeugfront verschiedenartige Informationsträger der hierin offenbarten Art vorgesehen sein. Je nachdem, welcher Informationsträger erfasst wird, kann also festgestellt werden, welche Kupplung in Kupplungsbereitschaft versetzt werden soll bzw. welchem Fahrzeugende bzw. welcher Fahrzeugfront sich das weitere Schienenfahrzeug aktuell annähert.

Ein nicht beanspruchtes Ausführungsbeispiel betrifft eine Steuereinrichtung, die dazu eingerichtet (z.B. dazu programmiert) ist, basierend auf einer übermittelten Identifizierungsinformation ein Steuersignal zu erzeugen und an eine mit der Identifizierungsinformation zusammenhängendes (bzw. dieser zugeordnetes) Schienenfahrzeug zu übermitteln, wobei das Steuersignal dazu eingerichtet (z.B. entsprechend codiert und/oder programmiert) ist, das Schienenfahrzeug zum Herstellen von dessen Kupplungsbereitschaft zu veranlassen.

Beispielsweise kann das Steuersignal für das Herstellen der Kupplungsbereitschaft benötigte Informationen umfassen, insbesondere dass bzw. welche Aktoren oder Steuergeräte (jeweils z.B. von einer Kupplungsverkleidung oder einer mechanischen Kupplungsbaugruppe) aktiviert oder betätigt werden soll.

Die Steuereinrichtung kann gemäß jeglicher hierin geschildeter Varianten ausgebildet und insbesondere fahrzeugextern sowie in einem Betriebsleitsystem bereitgestellt sein. Sie kann sämtliche weiteren Merkmale und Eigenschaften aufweisen, um sämtliche hierin geschilderten Betriebszustände und Verfahrensabläufe bereitzustellen und/oder zu steuern. Insbesondere kann sie dazu eingerichtet sein, ein Verfahren gemäß jeglicher hierin geschilderten Variante auszuführen.

Die Erfindung betrifft auch eine Anordnung zum Herstellen der Kupplungsbereitschaft eines Schienenfahrzeugs mit den Merkmalen des beigefügten Anspruchs 9 und insbesondere mit:
- wenigstens einem Schienenfahrzeug (zum Beispiel gemäß jeglicher hierin geschilderten Art);
- einer fahrzeugexternen Steuereinrichtung (z.B. der vorstehenden Art);
wobei die Steuereinrichtung basierend auf einer übermittelten Identifizierungsinformation des Schienenfahrzeugs dazu eingerichtet ist, ein Steuersignal zu erzeugen und an das Schienenfahrzeug zu übermitteln, wobei das Steuersignal dazu eingerichtet ist, das Schienenfahrzeug zum Herstellen von dessen Kupplungsbereitschaft zu veranlassen.

Die Anordnung kann sämtliche weiteren Merkmale und Eigenschaften aufweisen, um sämtliche hierin geschilderten Betriebszustände und Verfahrensabläufe bereitzustellen. Insbesondere kann sie dazu eingerichtet sein, ein Verfahren gemäß jeglicher hierin geschilderten Variante auszuführen. Erfindungsgemäß umfasst die Anordnung auch ein weiteres Schienenfahrzeug gemäß jeglicher hierin offenbarten Variante, das bevorzugt dazu eingerichtet ist, das (erste) Schienenfahrzeug zu identifizieren.

Die Erfindung wird im Folgenden beispielhaft anhand der beigefügten schematischen Figuren erläutert. Gleichartige oder gleichwirkenden Merkmale können figurenübergreifend mit den gleichen Bezugszeichen versehen sein.
- Fig. 1A-B:: zeigen eine Seiten- und eine Vorderansicht eines ersten Schienenfahrzeugs, dessen Kupplungsbereitschaft hergestellt werden soll;
- Fig. 2: zeigt, wie ein weiteres Schienenfahrzeug an das Schienenfahrzeug der Figuren 1A-B ankuppeln möchte;
- Fig. 3-4: zeigen den Signalfluss zwischen den Schienenfahrzeugen der Figur 2 und einer fahrzeugexternen Steuereinrichtung;
- Fig. 5: zeigt ein Ablaufschema eines Verfahrens gemäß einem erfindungsgemäßen Ausführungsbeispiel, wie zuvor anhand der Figuren 1-4 erläutert.

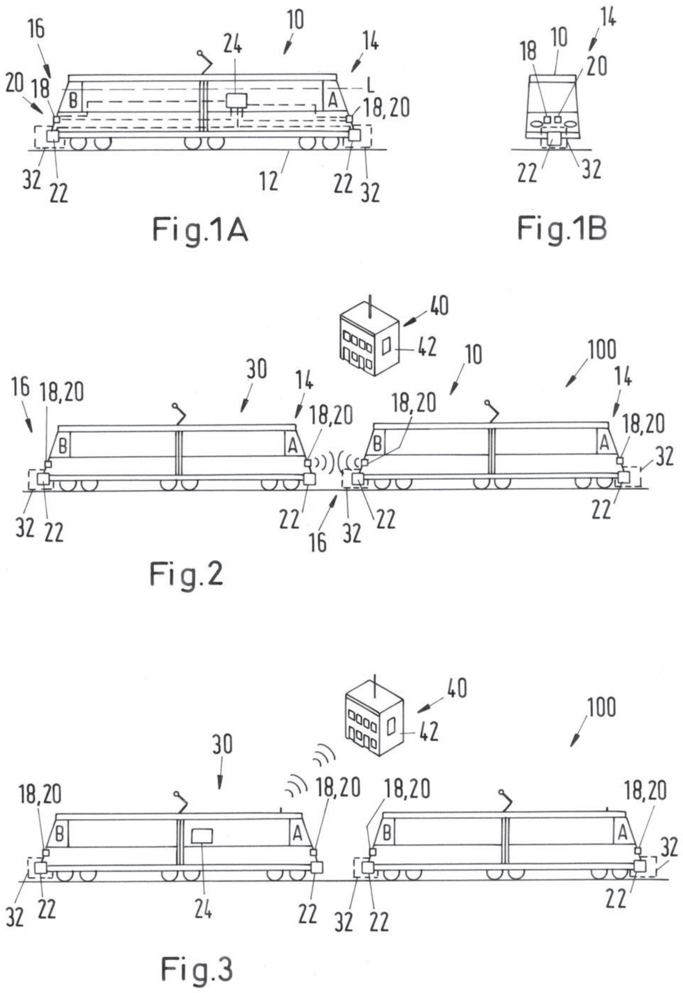

In Figur 1A ist ein Schienenfahrzeug 10 gezeigt, das lediglich beispielhaft Tram-Teilzug ist. Das Schienenfahrzeug 10 weist eine Längsachse L auf, die entlang einer (geradlinigen) Schienenstrecke 12 verläuft, auf der das Schienenfahrzeug 10 verkehrt.

Entlang der Längsachse L betrachtet, umfasst das Schienenfahrzeug 10 ein vorderes und ein hinteres Ende 14, 16 oder, mit anderen Worten, eine vordere und eine hintere Front 14, 16. An jedem entsprechenden Ende bzw. Front 14, 16 weist das Schienenfahrzeug 10 einen Führerstand A, B auf. In Figur 1B ist das vordere Ende 14 in einer Frontalansicht gezeigt.

Aus einer Zusammenschau der Figur 1A, 1B erkennt man, dass an jedem Ende bzw. jeder Front 14, 16 ein Informationsträger 18 vorzugsweise in Form eines RFID-Transponders angeordnet ist. Weiter ist dort auch vorzugsweise jeweils eine Erfassungseinrichtung 20 in Form eines RFID-Lesegeräts angeordnet (in Figur 1 am hinteren Ende 16 nicht einsehbar).

Schließlich ist auch an jedem Ende 14, 16 eine Kupplung 22 in Form eines mechanischen Bauteils (d. h. einer mechanischen Schnittstelle) angeordnet. Die Kupplungen 22 sind in an sich bekannter Weise jeweils mit einer bewegbaren Kupplungsverkleidung 32 versehen (mittels strichlierter Umrisse und lediglich schematische Größenverhältnisse angedeutet). Die Kupplungsverkleidungen 32 sind, wie im allgemeinen Beschreibungsteil erläutert, dazu eingerichtet, eine ihnen jeweils zugeordnete Kupplung 22 bedarfsweise und zum Beispiel zum Schutz vor Umwelteinflüssen zu verdecken oder zwecks Ankuppeln freizulegen.

Nicht gesondert dargestellt ist, dass sie Kupplung 22 beweglich ist und, in ebenfalls an sich bekannter Weise, zum Beispiel in eine von dem entsprechenden Ende 14, 16 hervorstehende Position bewegt werden kann. Für Bewegungen der Kupplungsverkleidung 32 und auch der Kupplung 22 sind jeweils nicht gesondert dargestellte Aktoren vorgesehen, zum Beispiel in Form von Elektromotoren oder auch hydraulischen oder pneumatischen Aktoren.

Das Schienenfahrzeug 10 weist ferner ein Steuergerät 24 auf. Hierbei kann es sich um ein sogenanntes ICTS- Steuergerät handeln, das eine Kommunikation mit einer nachstehend erläuterten Leitstelle bzw. einem (ICTS-) Betriebsleitsystem ermöglicht. Diese Kommunikation erfolgt kabellos, zum Beispiel über Mobilfunk oder anderweitige Funkverbindungen. Das Steuergerät 24 kann Bestandteil einer zentralen Fahrzeugsteuerung und/oder hiermit zumindest verbunden sein. Bevorzugt kann es die Fahrzeugsteuerung oder weitere hiervon umfasst Steuergeräte in der nachstehend geschilderten Weise aufwecken.

Gestrichelt angedeutet ist, dass das Steuergerät 24 über Datenverbindungen mit den Kupplungen 22 und auch den Kupplungsverkleidungen 32 und insbesondere deren jeweiligen (Bewegungs-) Aktoren verbunden ist. Das Steuergerät 24 ist prinzipiell dazu eingerichtet, diese Aktoren und somit die Kupplungen 22 und Kupplungsverkleidungen 32 zu aktivieren und in eine kupplungsbreite Position zu bewegen.

Letztere liegt zum Beispiel dann vor, wenn die Kupplungsverkleidungen 32 geöffnet sind bzw. die Kupplungen 22 freilegen und die Kupplungen 22 in eine vorbestimmte und einem weiteren Schienenfahrzeug vorzugsweise gegenüberliegende und/oder allgemein hervorstehende Position bewegt werden.

Ebenfalls gestrichelt angedeutet ist, dass das Steuergerät 24 auch mit den Erfassungseinrichtungen 20 über Datenverbindungen verbunden ist. Hierüber kann es Erfassungsinformation erhalten, insbesondere von den Erfassungseinrichtungen 20 ermittelte bzw. ausgelesene Identifizierungsinformationen, die in den RFID-Transpondern anderer Schienenfahrzeuge hinterlegt bzw. codiert sind.

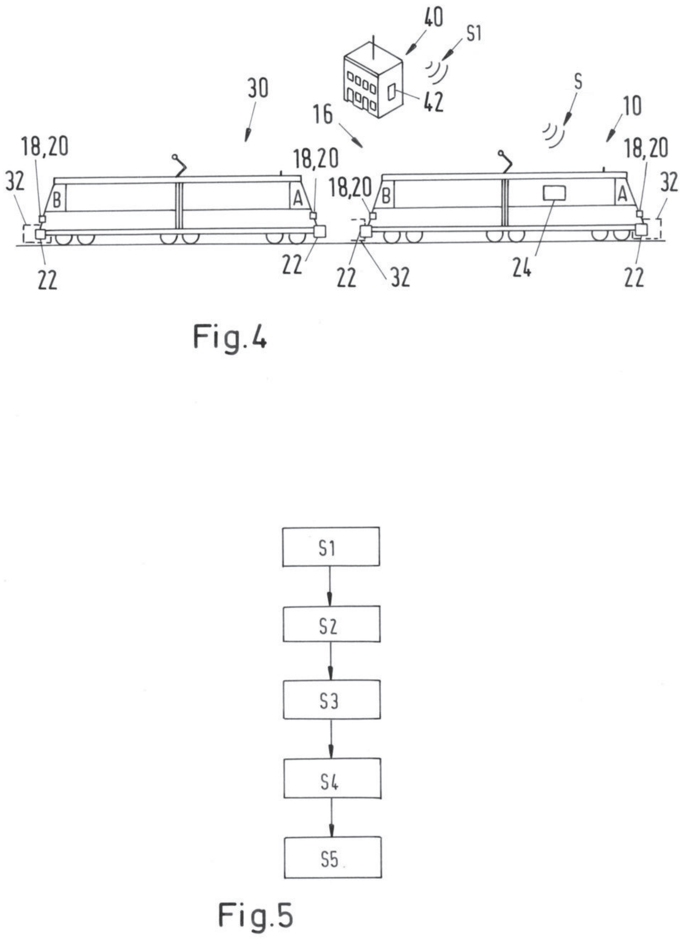

Das Steuergerät 24 ist auch dazu eingerichtet, einen Ruhezustand des Schienenfahrzeugs 10 zu beenden. Hierfür kann es in an sich bekannter Weise zum Beispiel eine elektrische Energieversorgung (insbesondere eine Batterie) des Schienenfahrzeugs 10 in einen aktiven bzw. nicht ruhenden Zustand versetzen oder anderweitige vorbestimmte Steuergeräte durch entsprechendes Ansteuern aktivieren. Der Ruhezustand kann sich auch dadurch auszeichnen, dass sich das Steuergerät 24 selbst in einem Ruhemodus befindet, der bei Erhalt eines Aufweck-Steuersignals S1 beendet wird (siehe Figur 4).

Allgemein kann das Steuergerät 24 einteilig oder mehrteilig aufgebaut sein und zum Beispiel auch mehrere Unter-Steuergeräte umfassen, die einzelne der vorstehenden Funktionen bereitstellen können. Beispielsweise kann das Steuergerät 24 eine gesonderte Kommunikationseinheit zum Ermöglichen der Kommunikation mit einer externen Leitstelle umfassen.

In den Figuren 2 bis 4, die im Folgenden zusammenhängend diskutiert werden, ist der Signalfluss und sind die einzelnen Betriebszustände einer Anordnung 100 gemäß einem Ausführungsbeispiel der Erfindung gezeigt.

Die Anordnung 100 umfasst das Schienenfahrzeug 10 aus Figur 1 sowie ein weiteres Schienenfahrzeug 30. Die Schienenfahrzeuge 10, 30 sind im gezeigten Beispiel gleichartig ausgebildet. Das weitere Schienenfahrzeug 30 soll mit dem ersten Schienenfahrzeug 10 mechanisch gekuppelt werden, um einen größeren zusammenhängenden Verbund zur gemeinsamen Fortbewegung zu bilden.

Die Anordnung 100 umfasst auch ein Betriebsleitsystem 40, dass lediglich beispielhaft von einem Gebäude (einer Leitstelle) umfasst ist. Dies trägt dem Umstand Rechnung, dass Betriebsleitsysteme 40 allgemein und auch im vorliegenden Fall ortsfest sind und zum Beispiel in einer Leitstelle eines Schienenverkehrsnetzbetreibers (vorliegende zum Beispiel eines Nahverkehrsbetreibers) bereitgestellt sind. Das Betriebsleitsystem 40, das allgemein rechnergestützt und im gezeigten Beispiel ein ICTS-Leitsystem ist, umfasst eine Steuereinrichtung 42, zum Beispiel in Form eines Computerservers.

Das Betriebsleitsystem 40 ist in an sich bekannter Weise dazu eingerichtet, mit den Schienenfahrzeugen 10, 30 kabellos zu kommunizieren. Die Steuereinrichtung 42 ist vorliegend dazu eingerichtet, Steuersignale zu erzeugen und an die Schienenfahrzeuge 10, 30 zu übermitteln. Weiter ist die Steuereinrichtung 42 dazu eingerichtet, Informationen von den Schienenfahrzeugen 10, 30 zu erhalten.

Wie ersichtlich, ist die Steuereinrichtung 42 extern von den Schienenfahrzeugen 10, 30 und insbesondere von jeglichem Schienenfahrzeug 10, 30 ausgebildet sowie allgemein ortsfest.

In dem Zustand aus Figur 2 befindet sich das erste Schienenfahrzeug 10 in einem Ruhezustand. Das weitere Schienenfahrzeug 30 ist hingegen aktiv und fährt auf das Schienenfahrzeug 10 zu. In dem Führerstand A dieses weiteren Schienenfahrzeugs 30 kann sich dabei ein Fahrzeugführer befinden.

Mit der Erfassungseinrichtung 20 an dem Ende 14, dass dem ersten Fahrzeug 10 gegenüberliegt, erfasst das weitere Schienenfahrzeug 30 den Informationsträger 18 des ersten Schienenfahrzeugs 10. Hierüber werden Identifikationsinformationen erhalten, anhand derer eine Identität des anzukuppelnden Schienenfahrzeugs 10 ermittelt werden kann.

Vorteilhafterweise kann anhand der Identifikationsinformationen auch ermittelt werden, welches Ende 14, 16 dem weiteren Schienenfahrzeug 30 gegenüberliegt bzw. an welches Ende 14, 16 des ersten Schienenfahrzeugs 10 sich das weitere Schienenfahrzeug 30 ankuppeln möchte.

Wie in Figur 3 angedeutet, werden die ermittelten Identifikationsinformationen von dem weiteren Schienenfahrzeug 30 (zum Beispiel von dessen Steuergerät 24) an das Betriebsleitsystem 40 übermittelt. Die externe Steuereinrichtung 42 besitzt somit Kenntnis darüber, welches Schienenfahrzeug 10, 30 angekuppelt werden soll und vorzugsweise auch, welche aus der Mehrzahl von Kupplungen 22 dieses Schienenfahrzeugs 10, 30 in Kupplungsbereitschaft versetzt werden soll.

Wie in Figur 4 angedeutet, erzeugt die Steuereinrichtung 42 daraufhin ein Steuersignal S zum Herstellen der Kupplungsbereitschaft und sendet dieses an das erste Schienenfahrzeug 10.

Optional kann vorgesehen sein, dass die Steinrichtung 42 zunächst zum Beispiel per Anfrage an das Steuergerät 24 des anzukuppelnden Schienenfahrzeugs 10 ermittelt, ob sich das erste Schienenfahrzeug 10 im Ruhezustand befindet. Wenn dies der Fall ist, kann auch zunächst ein Aufweck-Steuersignal S1 erzeugt werden, um den Ruhezustand dieses Schienenfahrzeugs 10 zu beenden. Beispielsweise kann das Steuergerät 24 dazu eingerichtet sein, bei Erhalt des Aufweck-Steuersignal S1 die Leistungsabgabe einer elektrischen Energieversorgung des Schienenfahrzeugs 10 zu erhöhen und/oder weitere (insbesondere auch von einer Kupplungsfunktion unabhängige) Steuergeräte oder Aktoren des Schienenfahrzeugs 10 einzuschalten.

Es ist prinzipiell aber auch möglich, ohne eine solche Überprüfung sozusagen präventiv ein Aufweck-Steuersignal S1 zu senden oder aber auf eine entsprechend Aufweck - Funktionalitäten gänzlich zu verzichten.

Das Steuersignal S zum Herstellen der Kupplungsbereitschaft wird ebenfalls von dem Steuergerät 24 erhalten. Daraufhin steuert das Steuergerät 24 vorzugsweise nur den Aktor derjenigen Kupplungsverkleidung 32 an, die der spezifischen Kupplung 22 zugeordnet ist, die mit dem weiteren Schienenfahrzeug 30 gekuppelt werden soll. Dies betrifft im gezeigten Fall die Kupplungsverkleidung 32 am hinteren Ende 16 des ersten Schienenfahrzeugs 10. Wie schematisch in Figur 4 angedeutet, wird die Kupplungsverkleidung 32 darauf hin geöffnet, sodass sie zuvor verdeckte Kupplung 22 von außen zugänglich ist.

Außerdem wird bei Erhalt des Steuersignals S ein Aktor der Kupplung 22 angesteuert, um diese in eine vorbestimmte Kupplungsposition zu bewegen. Anschließend kann das weitere Schienenfahrzeug 30 in an sich bekannter Weise weiter auf das erste Schienenfahrzeug 10 zu fahren und mittels der Kontaktieren der Kupplungen 22 die Kupplung herstellen.

In Figur 5 ist ein Ablaufschema eines erfindungsgemäßen Verfahrens gezeigt, wie es vorstehend anhand der Figuren 1 bis 4 erläutert wurde.

In einem Schritt S1 ermittelt ein weiteres Schienenfahrzeug 30 durch Erfassen bzw. Auslesen eines Informationsträger 18 Identifikationsinformationen eines ersten Schienenfahrzeugs 10, an das sich das weitere Schienenfahrzeug 30 ankuppeln möchte.

In einem Schritt S2 werden die erhaltenen Identifikationsinformationen von dem weiteren Schienenfahrzeug 30 an das Betriebsleitsystem 40 übermittelt.

In einem Schritt S3 erzeugt eine fahrzeugexterne Steuervorrichtung 42, die beispielhaft von dem Betriebsleitsystem 40 umfasst ist, Steuersignale S, S1, vorzugsweise um das erste Schienenfahrzeug 10 (sofern erforderlich) aufzuwecken, jedenfalls aber um dessen Kupplungsbereitschaft herzustellen.

In einem Schritt S4 werden diese Steuersignale S, S1 von einem Steuergerät 24 des ersten Schienenfahrzeugs 10 erhalten, welches daraufhin die relevanten Aktoren und gegebenenfalls auch weitere Steuergeräte ansteuert, um die Kupplungsbereitschaft des Schienenfahrzeugs herzustellen vorzugsweise nur mit einer aus einer Mehrzahl von Kupplungen 22.

In einem Schritt S5 wird daraufhin das weitere Schienenfahrzeug 30 mit dem dann kupplungsbereiten ersten Schienenfahrzeug 10 gekuppelt.

Wie gezeigt, ist es somit prinzipiell nicht erforderlich, dass die Schienenfahrzeuge 10, 30 direkt miteinander kommunizieren. Stattdessen kann auf eine gegebenenfalls bereits existierende Kommunikationsinfrastruktur mit dem Betriebsleitsystem 40 zurückgegriffen werden. Zudem kann auch dann eine Kupplung hergestellt und sozusagen von extern initiiert werden, wenn eines der Schienenfahrzeuge 10, 30 sich in einem Ruhezustand befindet. Durch Ermitteln von Identifikationsinformationen ist ferner gewährleistet, dass unbeteiligte Schienenfahrzeuge 10, 30 zum Beispiel auf einem Nebengleis nicht fälschlicherweise in Kupplungsbereitschaft versetzt werden.

## Patentansprüche

1. Verfahren zum Herstellen der Kupplungsbereitschaft eines Schienenfahrzeugs (10), mit:
- Übermitteln einer Identifizierungsinformation des Schienenfahrzeugs (10) an eine fahrzeugexterne Steuervorrichtung (42);
- Erzeugen eines Steuersignals (S) durch die Steuervorrichtung (42), wobei das Steuersignal (S) dazu eingerichtet ist, das Schienenfahrzeug (10) zum Herstellen von dessen Kupplungsbereitschaft zu veranlassen;
- Übermitteln des Steuersignals (S) an das Schienenfahrzeug (10),
**dadurch gekennzeichnet, dass**
sich das Schienenfahrzeug (10) zunächst in einem Ruhezustand befindet und durch die fahrzeugexterne Steuervorrichtung (42) auch ein Aufweck-Steuersignal (S1) zum Beenden des Ruhezustands erzeugt wird.

2. Verfahren nach Anspruch 1,
wobei der Ruhezustand umfasst, dass sich wenigstens ein Steuergerät (24) des Schienenfahrzeugs (10) in einem Ruhemodus befindet, der bei Erhalten des Aufweck-Steuersignals (S1) beendbar ist.

3. Verfahren nach Anspruch 1 oder 2, wobei der Ruhezustand umfasst, dass eine zentrale Fahrzeugsteuerung mit einem oder mehreren Steuergeräten abgeschaltet ist.

4. Verfahren nach einem der Ansprüche 1 bis 3,
wobei durch Berücksichtigen der Identifizierungsinformation gewährleistet wird, dass tatsächlich das Schienenfahrzeug (10) das zum Herstellen der Kupplungsbereitschaft beabsichtigte Schienenfahrzeug ist.

5. Verfahren nach einem der Ansprüche 1 bis 4,
wobei das Herstellen der Kupplungsbereitschaft wenigstens eine der folgenden Maßnahmen umfasst:
- Freilegen einer Kupplung des Schienenfahrzeugs (10) von einer Kupplungsverkleidung (32);
- Anordnen einer Kupplung des Schienenfahrzeugs (10) Kupplung in einer kupplungsbereiten Position.

6. Verfahren nach einem der Ansprüche 1 bis 5,
wobei die Steuereinrichtung (42) von einem Betriebsleitsystem (40) umfasst ist, das dazu eingerichtet ist, mit einer Mehrzahl von Schienenfahrzeugen (10) zu kommunizieren.

7. Verfahren nach einem der Ansprüche 1 bis 6, wobei das Schienenfahrzeug (10) von einem weiteren Schienenfahrzeug identifiziert wird und das weitere Schienenfahrzeug darauf basierend ein Betriebsleitsystem veranlasst, das Schienenfahrzeug (10) aufzuwecken und/oder zum Herstellen der Kupplungsbereitschaft anzusteuern.

8. Verfahren nach einem der Ansprüche 1 bis 7,
wobei ermittelt wird, mit welcher aus einer Mehrzahl von Kupplungen (22) des Schienenfahrzeugs (10) die Kupplungsbereitschaft hergestellt werden soll.

9. Anordnung zum Herstellen der Kupplungsbereitschaft eines Schienenfahrzeugs (10), insbesondere zur Ausführung des Verfahrens gemäß einem der vorhergehenden Ansprüche, mit:
- wenigstens einem Schienenfahrzeug (10);
- einer fahrzeugexternen Steuereinrichtung (42);
wobei die Steuereinrichtung (42) basierend auf einer übermittelten Identifizierungsinformation des Schienenfahrzeugs (10) dazu eingerichtet ist, ein Steuersignal (S) zu erzeugen und an das Schienenfahrzeug (10) zu übermitteln, wobei das Steuersignal (S) dazu eingerichtet ist, das Schienenfahrzeug (10) zum Herstellen von dessen Kupplungsbereitschaft zu veranlassen,
**dadurch gekennzeichnet, dass**
sich das Schienenfahrzeug (10) zunächst in einem Ruhezustand befindet und durch die fahrzeugexterne Steuervorrichtung (42) auch ein Aufweck-Steuersignal (S1) zum Beenden des Ruhezustands erzeugbar ist.
